(19)

Europäisches
Patentamt
European
Patent Office
Office européen
des brevets

(11) **EP 2 560 080 A1**

(12) **EUROPEAN PATENT APPLICATION**

(43) Date of publication:
**20.02.2013 Bulletin 2013/08**

(51) Int Cl.:
***G06F 3/042*** *(2006.01)*

(21) Application number: **12172711.9**

(22) Date of filing: **20.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.08.2011 TW 100129704**

(71) Applicant: **TPK Touch Solutions Inc.
Neihu Taipei City
114 (TW)**

(72) Inventors:
• **Wu, Sean Hsi Yuan
112 Taipei City (TW)**
• **Su, Sheng-Pin
320 Zhongli (TW)**

(74) Representative: **Schwerbrock, Florian
Danziger Straße 35a
20099 Hamburg (DE)**

(54) **An optical touch system and a positioning method thereof**

(57) The present disclosure provides an optical touch system and a positioning method thereof based on stereo vision theory. The proposed optical touch system adopts at least two adjustable linear image sensors to capture image information so that the information can be applicable to different sizes of touch screens by adjusting locations of the image sensors. Sensing area covers the whole screen without the need to increase quantity of sensors; besides, the present disclosure also provides a positioning method for the optical touch system, making the spectra emitted by a stylus correspond to the image sensors, which leaves out complicated image processing to improve the speed and accuracy of touch response.

Fig.4

EP 2 560 080 A1

**Description**

**BACKGROUND**

**TECHNICAL FIELD**

The present disclosure relates to an optical touch system. More particularly, the present disclosure relates to an optical touch system that adopts a method of adjustable positioning to determine a touch location and positioning method thereof.

**DESCRIPTION OF THE RELATED ART**

Types of common touch screens include resistive type, capacitive type, acoustic-wave type, and optical type. A resistive touch screen comprises of an ITO (Indium-Tin-Oxide) film and a sheet of ITO glass, which are spaced from each other by a plurality of insulation spacers. When a touching object (such as a stylus) touches and depresses the ITO film, a local depression is formed, which makes contact with the ITO glass located therebelow thereby inducing a variation of voltage, which, after conversion from analog signal to digital signal, is applied to a microprocessor to be processed for calculation and determination of operation position of the touched point. Capacitive touch screens, on the other hand, determine position coordinates of a touch point based on the capacitance change generated by electrostatic bond between the arranged transparent electrodes and the human body. Acoustic-wave touch screens transform electrical signals into ultrasonic waves in advance and then directly transmit to the surface of the touch screen, and when a user touches the screen, the ultrasonic waves are absorbed, which first leads to attenuation and subsequently leads to determination of accurate touch location based on the attenuation amount of the ultrasonic waves before and after touching.

Resistive touch screens and capacitive touch screens are always mainstreams of the market. However, with the requirement of larger size touch screens growing fast, and with accumulating cost pressure on the manufacturers, optical touch technologies are gradually emerging. Common optical touch screens can be roughly classified into the following types: infrared type, CMOS/CCD type, embedded type, and projective type touch screens. Typically, optical touch technologies generate a shadow by shading effect and then sense the shadow change by a photosensitive component (such as an image sensor) so as to determine the touch location. The image sensor, developed on the basis of photoelectric technology, transforms an optical image into one-dimensional time sequence signals. Typical example of Vacuum-tube image sensors include electron-beam camera tubes, image intensifiers and image converters, and examples of semiconductor integrated image sensors are charge coupled devices (CCD) and complementary metal-oxide semiconductor field effect transistors (CMOS) and scanning-type image sensors. The vacuum-tube image sensors such as electron-beam camera tubes are gradually being replaced by semiconductor integrated image sensors such as CCD and CMOS.

Traditional optical touch screens have a common defect, which is that the quantity of sensors used in the screens are increased or reduced based on size of the touch screen so that it can be applicable to different sensing scopes. Moreover, existing touch screens are mainly manufactured on customized product basis, which is an overburden for the manufacturers. Therefore, the exists a need for an optical touch system that adopts a method of adjustable positioning to determine the touch location only by adjusting locations of the sensors so as to be applicable to touch screens of different specifications.

**SUMMARY OF THE INVENTION**

An object of the present disclosure is to provide an optical touch system and positioning method thereof.

An optical touch system in the present disclosure comprises an area to be sensed and a sensing unit; the sensing unit comprises at least two image sensors; wherein locations of the image sensors are adjustable and sensing areas of the image sensors intersect with each other forming an intersection zone, further wherein the intersection zone covers the area to be sensed.

A positioning method of an optical touch system in the present disclosure comprises of: simultaneously driving at least two image sensors ; capturinge image information of an area to be sensed through the two image sensors respectively; analyzing image information to judge whether there are supersaturated responding patches; calculating location information of the area to be sensed corresponding to the supersaturated responding patches ; and getting touch location information of the area to be sensed by calculating location of the center point of the patches composed of the supersaturated pixels.

An optical touch system and positioning method thereof in the present disclosure is based on stereo vision theory. The positioning method comprises adopting at least two adjustable image sensors to capture image information so that it can be applicable to different sizes of touch screens by adjusting locations of the image sensors. Further, sensing area of the touch system covers the whole screen without any need to increase quantity of sensors. Meanwhile, the positioning method, provided in the present disclosure, can make a spectra, emitted by a stylus, correspond to the image sensors so as to reduce touch response time and improve accuracy of touch location detection.

**BRIEF DESCRIPTION OF THE DRAWINGS**

FIG. 1 is a schematic view 1 of stereo vision theory for an optical touch system.
FIG. 2 is a schematic view 2 of stereo vision theory for an optical touch system.
FIG. 3 is a schematic structure view of an optical touch system including a stylus.
FIG. 4 is a schematic structure view of an adjustable touch system.
FIG. 5 is a schematic view of mutual spacing adjustment of the adjustable touch system of FIG. 4.
FIG. 6 is a schematic structure view of an embedded touch system;
FIG. 7 is a schematic structure view of an external touch system;
FIG. 8 is a sectional view of the connection structure of the external touch system of FIG. 7;
FIG. 9 is a schematic structure view of a stylus which contains IR-LED;
FIG. 10 is a flowchart of the positioning method for an optical touch system.

**DETAILED DESCRIPTION OF EMBODIMENTS**

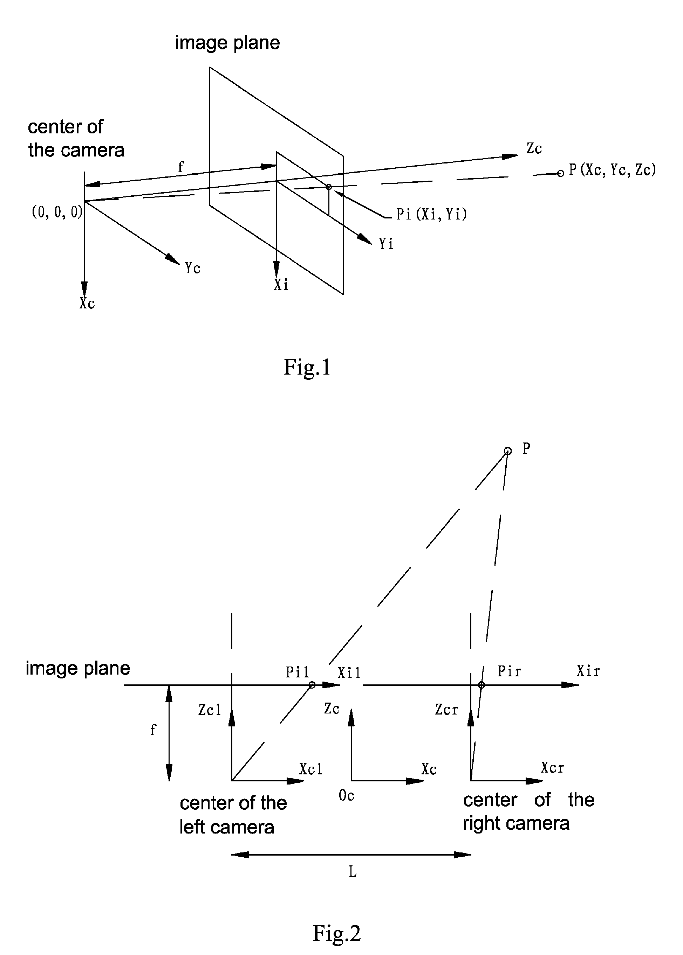

In order to further clarify technical solutions of the present disclosure, detailed explanation for the present disclosure will be made along with drawings as follows.
In an embodiment, the optical touch system of the present disclosure is based on stereo vision theory. One reason why people have stereo vision is that visual angles of left and right eyes are quite different from each other and an object seen by the left eye is inclined towards the left side and an object seen by the right eye is inclined towards the right side, and the two images, as seen by respective eyes, are transmitted to human brain via an optic nerve. Finally, the two images are integrated into a single stereo image by the brain. The present disclosure combines photography principle with stereo vision theory and adopts two image sensors that are equivalent to people's left and right eyes to achieve an accurate positioning of the touch point.
The main principle of Photography is to record data of a three-dimensional space on a medium of two-dimensional space. For traditional camera, the medium is a negative film and for digital camera, the medium is each and every pixel on a CMOS sensor. When recording information of the three-dimensional space on a medium of two-dimensional space, there is a certain geometrical relationship. Referring to FIG. 1, for a point P of a three-dimensional space, its coordinates correspond to center of the camera $(x_c, y_c, z_c)$ and after projecting the point on the image plane through the photography process, its corresponding coordinates become $(x_i, y_i)$. Geometrical relationship for point P before projection and after being projected on the image plane, is as follows:

$$x_i = f \frac{x_c}{z_{,c}}$$

$$(1)$$

$$y_i = f \frac{y_c}{z_{,c}}$$

$$(2)$$

Referring to Fig.1, "f" is the distance between center of the camera and center of the image plane, and the numerical value of it is known. Therefore, if coordinates of a point P of a three-dimensional space is known, location of its corresponding point on the image plane can be determined based on formulas (1) and (2) given above. On the contrary, if coordinate value of Pi on the image plane is known, it is not possible to back infer the location of point P.
In an embodiment, if two cameras that are located at the same datum line, having a distance of L between them, are used to record information of point P simultaneously, as shown in FIG. 2, coordinate of the target point corresponding to the whole photography system is $(x_c, y_c, z_c)$. Coordinate corresponding to the left camera is $(x_{cl}, y_{cl}, z_{cl})$ and coordinates of corresponding point on the left image plane is $(x_{il}, y_{il})$. Similarly, coordinate corresponding to the right camera is ($x_{cr}$, $y_{cr}$, $z_{cr}$) and coordinates of corresponding point on the right image plane is ($x_{ir}$, $y_{ir}$). Mutual relationship can be inferred according to the geometrical relationship in FIG. 2 as follows:

$$\frac{x_{cl}}{x_{il}} = \frac{x_{cr}}{x_{ir}} = \frac{z_c}{f}$$

$$L = x_{cl} - x_{cr} = \frac{z_c}{f}(x_{il} - x_{ir})$$

$$z_c = \frac{Lf}{(x_{il} - x_{ir})} \tag{3}$$

Therefore, according to formula (3) in the present embodiment, it can be seen that if coordinate information of $P_{il}$ and $P_{ir}$ is known, $z_c$ can be calculated quickly according to the formula (3). Similarly, $x_c$ and $y_c$ can be calculated according to the following two formulas, and thereby accurate location coordinates ($x_c$, $y_c$, $z_c$) of point P can be calculated:

$$x_c = \frac{x_{cl} + x_{cr}}{2} = \frac{x_{il} + x_{ir}}{2}\frac{z_c}{f} = \frac{L}{2}\frac{x_{il} + x_{ir}}{x_{il} - x_{ir}} \tag{4}$$

$$y_c = \frac{L}{2}\frac{y_{il} + y_{ir}}{x_{il} - x_{ir}} \tag{5}$$

The above theoretical basis is called as stereo vision theory or bi-nocular vision theory.

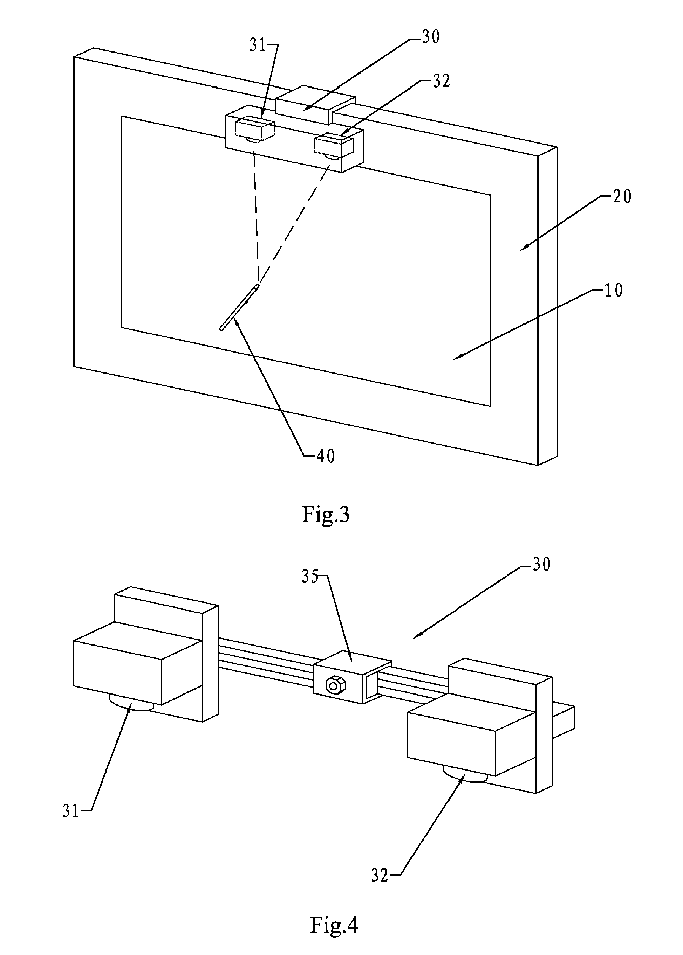

Referring to FIG. 3, an optical touch system 30 at least comprises a first image sensor 31 and a second image sensor 32. According to the above-mentioned stereo vision theory, the first image sensor 31 and the second image sensor 32 are equivalent to the two cameras installed at the same datum line in FIG. 2, but the present embodiment is applied to a touch panel, and therefore $y_c = y_{il} = y_{ir}$ = fixed value and the fixed value can be set as 0; therefore, linear CMOS sensor or linear CCD sensor can be adopted as the first image sensor 31 and the second image sensor 32 in the present embodiment to replace two-dimensional image sensor. Besides, the distance L between the first image sensor 31 and the second image sensor 32 is also fixed. According to the geometrical relationship of the above formulas (3), (4) and (5), actual touch location can be determined.

Referring to FIG. 3, combining the optical touch system 30 which at least comprises of the first image sensor 31 and the second image sensor 32 with a display panel 10 will upgrade the existing non-touch display screen into touch screen. When a stylus 40, a finger, or other objects touch the display panel 10, the first image sensor 31 and the second image sensor 32 respectively capture images that contain touch location information and then after integrating the two groups of image information by the system, actual touch location information will be calculated and fed back to the display panel 10 so that it can carry out corresponding action.

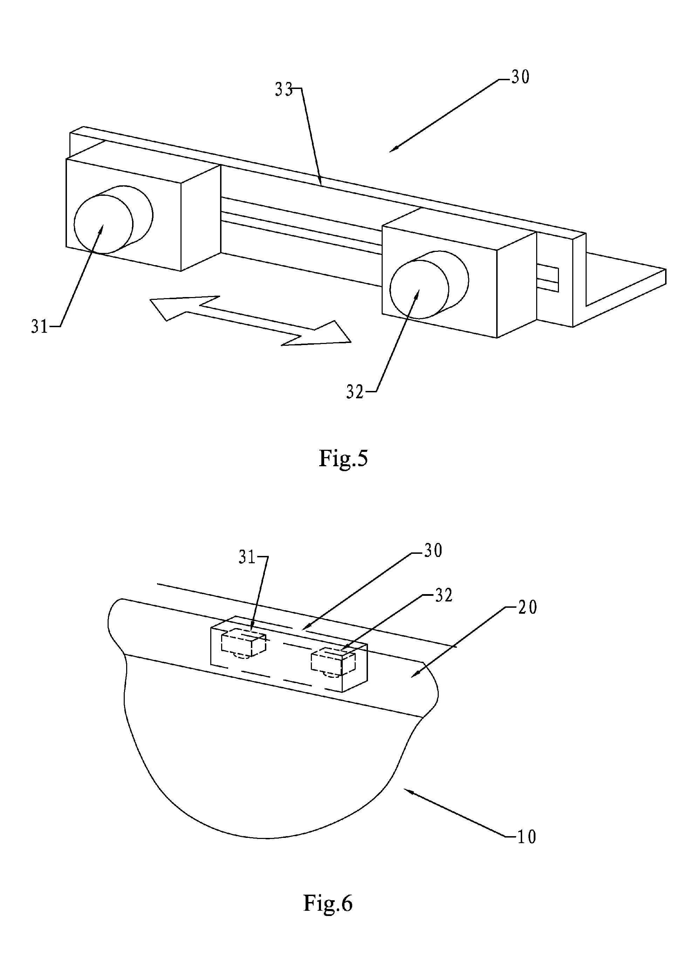

Referring to FIG. 4, sensing scope of the optical touch system is adjustable. Sensing areas of the first image sensor 31 and the second image sensor 32 intersect with each other, forming an intersection zone. In an embodiment, adjusting locations of the image sensors 31 and 32 can make the intersection zone cover the whole area to be sensed. For instance, space between the first image sensor 31 and the second image sensor 32 can be adjusted by an adjustment mechanism 35, as shown in FIG. 5, to fit different sizes of screens. Wide-angle lenses can also be installed in the image sensors to expand sensing scope. Further, area to be sensed can be the above-mentioned display panel or other screens, such as projection screens. When the size of a screen changes, a user can adjust mutual locations of the image sensors and start a correction program to input new L value into the system; thereby, it can be applied to new touch system.

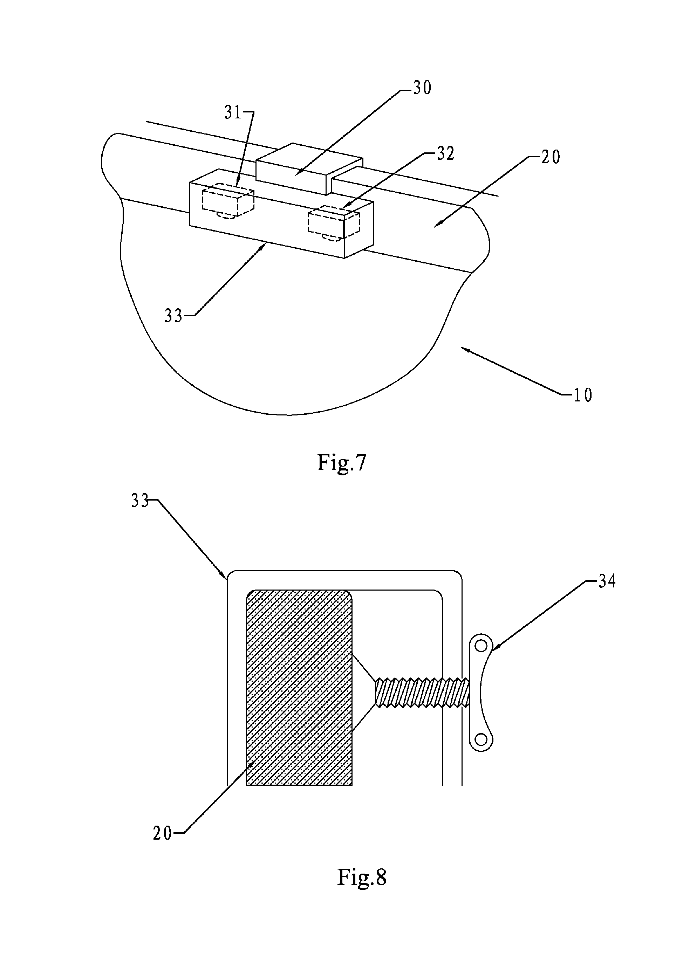

Referring to FIG. 6 and FIG. 7, the optical touch system 30 can adopt embedded type or external type to combine with the display panel 10. If embedded type combination is adopted, as shown in FIG. 6, the optical touch system 30 can be integrated to the external frame 20 of the display panel 10. On the other hand, if external type combination is adopted, as shown in FIG. 7, the optical touch system 30 at least comprises a first image sensor 31, a second image sensor 32, and a housing 33, and as shown in FIG. 8, the housing 33 of the optical touch system 30, and the external frame 20 of the display panel 10 are connected by a fixing screw 34. If the display screen is any other screen such as a projection screen, optical touch system 30 can also be set externally around the screen.

The optical touch system also comprises a stylus 40, wherein spectra emitted by the stylus 40, corresponding to the image sensors, reduces touch response time and improves accuracy of detection of touch location. For instance, if CMOS sensors are adopted as the image sensors, an IR light source can be set inside a stylus 40. Since CMOS sensors have different responses to the spectra of different wavelengths, especially having a highly sensitive response to IR spectra, when the CMOS sensors capture image information of a touch location, pixels of the corresponding areas on the CMOS sensors are stimulated by IR light and present a state of supersaturated response, which helps in obtaining information of the touch location.

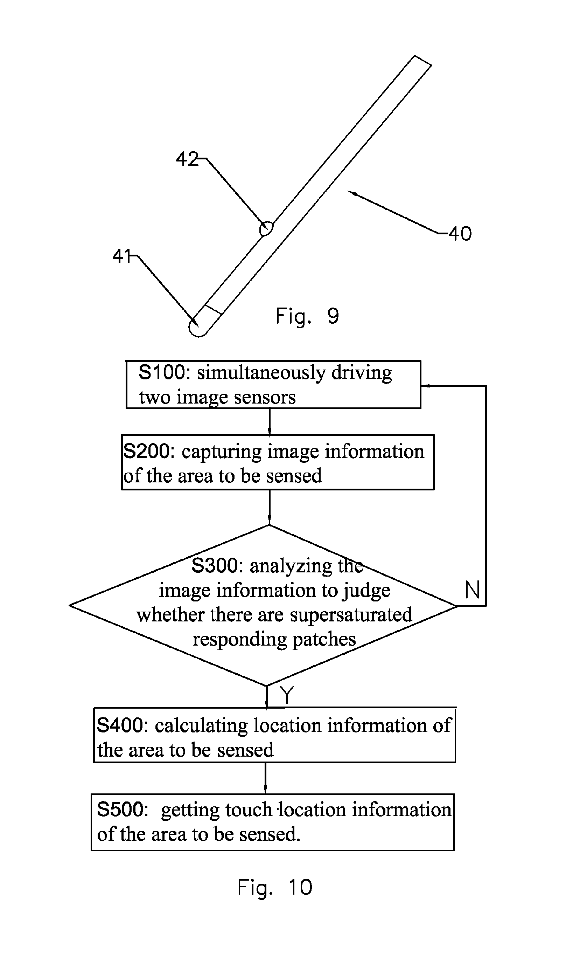

Referring to FIG. 9, the stylus 40 at least comprises an on-off switch 42 and an IR LED 41. The IR LED 41 can use IR light with the spectrum of 890nm-980nm. When the on-off switch 42 is turned on, the stylus 40 operates information input, and when the CMOS sensors capture the image of the IR LED, pixels of the corresponding areas on the sensors are stimulated by the IR light and reach to a state of supersaturated response; and then calculate location of the center point of the patches composed of the supersaturated pixels to get the touch location. The method avoids lengthy and complicated image processing process but also improves the speed and accuracy of touch response.

Referring to FIG. 10, a positioning method of an optical touch system comprises the following steps:

> S100: simultaneously driving two image sensors;
> S200: capturing image information of the area to be sensed through the two image sensors respectively;
> S300: analyzing the image information to judge whether there are supersaturated responding patches. If patches exist, moving on to the next step and if the patches do not exist, going back to the step S100;
> S400: calculating location information of the area to be sensed corresponding to the supersaturated responding patches;
> S500: getting touch location information of the area to be sensed by calculating location of the center point of the patches composed of the supersaturated pixels.

Although the present invention has been described with reference to the embodiments thereof and best modes for carrying out the present invention, it is apparent to those skilled in the art that a variety of modifications and changes may be made without departing from the scope of the present invention, which is intended to be defined by the appended claims.

**Claims**

1. An optical touch system, comprising an area to be sensed and a sensing unit, wherein the sensing unit comprises of at least two image sensors, further wherein locations of the image sensors are adjustable and sensing areas of the image sensors intersect with each other forming an intersection zone, further wherein the intersection zone covers the area to be sensed.

2. The optical touch system according to claim 1, wherein linear sensors are adopted as the image sensors.

3. The optical touch system according to claim 1, wherein CMOS sensors or CCD sensors are adopted as the image sensors.

4. The optical touch system according to claim 1, wherein the area to be sensed is a display panel or a projection screen.

5. The optical touch system according to claim 4, wherein the optical touch system can be an embedded type or an external type to combine with the display panel or the projection screen.

6. The optical touch system according to claim 1, wherein wide-angle lenses are set on the image sensors.

7. The optical touch system according to claim 1, wherein the optical touch system further comprises of a stylus, wherein spectra emitted by the stylus corresponds to the image sensors.

8. The optical touch system according to claim 7, wherein an IR LED is set inside the stylus and CMOS sensors are adopted as the image sensors.

9. The optical touch system according to claim 8, wherein spectrum of the IR LED is 890 nm - 980 nm.

10. A positioning method of an optical touch system, the method comprising the steps of:

simultaneously driving at least two image sensors;
capturing image information of the area to be sensed through the two image sensors respectively;
analyzing the image information to judge whether there are supersaturated responding patches;
calculating location information of the area to be sensed corresponding to the supersaturated responding patches;
getting touch location information of the area to be sensed by calculating location of the center point of the patches composed of the supersaturated pixels.

Fig.1

Fig.2

Fig.3

Fig.4

Fig.5

Fig.6

Fig.7

Fig.8

42

41

40

Fig. 9

S100: simultaneously driving two image sensors

S200: capturing image information of the area to be sensed

S300: analyzing the image information to judge whether there are supersaturated responding patches

N

Y

S400: calculating location information of the area to be sensed

S500: getting touch location information of the area to be sensed.

Fig. 10

Europäisches
Patentamt

European
Patent Office

Office européen
des brevets

**EUROPEAN SEARCH REPORT**

Application Number

EP 12 17 2711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 287 713 A2 (SMART TECHNOLOGIES ULC [CA]) 23 February 2011 (2011-02-23) * paragraphs [0037] - [0040], [0050] - [0052]; figures 2A,3,4,6A,6B * ----- | 1-10 | INV.<br>G06F3/042 |
| X | US 2002/162949 A1 (IWAMOTO YASUHIDE [JP] ET AL) 7 November 2002 (2002-11-07) * paragraphs [0028], [0034] - [0038], [0049], [0050]; figures 2,6a,6b,12 * ----- | 1-10 | |
| A | US 6 100 538 A (OGAWA YASUJI [JP]) 8 August 2000 (2000-08-08) * column 2, line 43 - column 5, line 30 * * column 6, line 43 - column 8, line 55; figures 1,2 * * column 11, line 54 - column 12, line 4 * ----- | 1-10 | |

| | | | TECHNICAL FIELDS SEARCHED (IPC) |
|---|---|---|---|
| | | | G06F |

The present search report has been drawn up for all claims

| Place of search | Date of completion of the search | Examiner |
|---|---|---|
| Munich | 16 November 2012 | Thibaudeau, Jean |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 17 2711

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2012

| Patent document cited in search report | | Publication date | Patent family member(s) | | Publication date |
|---|---|---|---|---|---|
| EP 2287713 | A2 | 23-02-2011 | CA | 2707783 A1 | 17-12-2010 |
| | | | CN | 101930261 A | 29-12-2010 |
| | | | EP | 2287713 A2 | 23-02-2011 |
| | | | US | 2011032216 A1 | 10-02-2011 |
| US 2002162949 | A1 | 07-11-2002 | DE | 10085378 T1 | 30-01-2003 |
| | | | US | 2002162949 A1 | 07-11-2002 |
| | | | WO | 0157635 A1 | 09-08-2001 |
| US 6100538 | A | 08-08-2000 | DE | 19810452 A1 | 17-12-1998 |
| | | | JP | 3876942 B2 | 07-02-2007 |
| | | | JP | 11003170 A | 06-01-1999 |
| | | | US | 6100538 A | 08-08-2000 |
| | | | US | 6441362 B1 | 27-08-2002 |

EPO FORM P0459

For more details about this annex : see Official Journal of the European Patent Office, No. 12/82